Europäisches Patentamt

European Patent Office

Office européen des brevets

(11) Veröffentlichungsnummer: **0 261 502 B1**

## EUROPÄISCHE PATENTSCHRIFT

(45) Veröffentlichungstag der Patentschrift: **02.01.92**

(21) Anmeldenummer: **87113167.8**

(22) Anmeldetag: **09.09.87**

(51) Int. Cl.⁵: **B62L 3/02**

(54) **Hydraulische Felgenbremse für Fahrräder.**

(30) Priorität: **13.09.86 DE 3631299**

(43) Veröffentlichungstag der Anmeldung:
**30.03.88 Patentblatt 88/13**

(45) Bekanntmachung des Hinweises auf die
Patenterteilung:
**02.01.92 Patentblatt 92/01**

(84) Benannte Vertragsstaaten:
**AT CH DE FR IT LI NL**

(56) Entgegenhaltungen:
**EP-A- 0 143 934**
**FR-A- 2 152 676**
**US-A- 3 870 127**
**US-A- 4 391 353**

(73) Patentinhaber: **Gustav Magenwirth GmbH & Co.**
**Stuttgarter Strasse 48**
**W-7432 Urach 1(DE)**

(72) Erfinder: **Engfer, Ortwin**
**Im Geiger 30**
**W-7000 Stuttgart 50(DE)**
Erfinder: **Rottenkolber, Ludwig**
**Eichhaldestrasse 44**
**W-7432 Bad Urach(DE)**

(74) Vertreter: **Hoeger, Stellrecht & Partner**
**Uhlandstrasse 14 c**
**W-7000 Stuttgart 1(DE)**

EP 0 261 502 B1

## Beschreibung

Die Erfindung betrifft eine hydraulische Felgenbremse für Fahrräder mit einem am Rahmen des Fahrrades befestigten Trägerbügel, mit zwei an den Schenkeln des Bügels angeordneten Bremszylindern, mit in den Zylindern verschieblichen, federbelasteten Kolben, mit an den Kolben angeordneten, über die Zylinder vorstehenden Bremsbackenträgern und mit an den Bremsbackenträgern befestigten Bremsbacken, die bei Ausübung eines hydraulischen Druckes auf die Kolben gegen die Felge anpreßbar sind (Anspruch 1) sowie ein Verfahren zur Verstellung eines Träger bügels (Anspruch 12).

Bei einer bekannten Felgenbremse dieser Art (GB-PS 14 05 676) ist in jedem Bremszylinder eine besondere, den Kolben belastende Schraubenfeder angeordnet, die den Kolben bei nachlassendem hydraulischem Druck von der Felge abhebt und in eine Ruheposition überführt. Diese Federn bedingen einen beträchtlichen Herstellungs-und Montageaufwand.

Es ist Aufgabe der Erfindung, bei einer gattungsgemäßen Felgenbremse die Rückfederung der Kolben zu vereinfachen.

Die Aufgabe wird erfindungsgemäß dadurch gelöst (Anspruch 1), daß außerhalb der Bremszylinder eine gemeinsame Bügelfeder angeordnet ist, welche mit ihren freien Enden an den Backenträgern angreift und diese von der Felge wegdrückt.

Weiterhin soll bei einer hydraulischen Felgenbremse der eingangs genannten Art die in den Bremsbacken eingeleitete Bremskraft in einfacher Weise in den Trägerbügel und damit in den Fahrradrahmen einführbar sein. Der die Bremszylinder tragende Bügel soll besonders einfach herstellbar sein und es soll die Möglichkeit gegeben sein, die Bremsbacken parallel zur Felge auszurichten.

Die nachstehende Beschreibung bevorzugter Ausführungsformen der Erfindung dient im Zusammenhang mit beiliegender Zeichnung der weiteren Erläuterung. Es zeigen:

Fig. 1   eine Querschnittsansicht einer hydraulischen Felgenbremse für Fahrräder;

Fig. 2   eine teilweise entlang der Linie 2-2 in Fig. 1 geschnittene Ansicht der Bremse;

Fig. 3   eine Ansicht in Richtung des Pfeiles A in Fig. 1;

Fig. 4   einen gekrümmten Trägerbügel und seine Herstellung;

Fig. 5   die Herstellung einer abgewandelten Ausführungsform eines Trägerbügels;

Fig. 6   eine Querschnittsansicht einer gegenüber Fig. 1 abgewandelten Ausführungsform einer Felgenbremse mit tangential zur Felge ausrichtbaren Bremsbacken;

Fig. 7   eine entlang der Linie 7-7 in Fig. 6 geschnittene Ansicht;

Fig. 8   eine Schnittansicht entlang der Linie 8-8 in Fig. 6;

Fig. 9   eine Ansicht einer weiterhin abgewandelten Ausführungsform einer Felgenbremse mit ausrichtbaren Bremsbacken und Einleitung der Bremskraft in den Trägerbügel;

Fig. 10   eine Schnittansicht entlang der Linie 10-10 in Fig. 9 und

Fig. 11   eine Schnittansicht entlang der Linie 11-11 in Fig. 9.

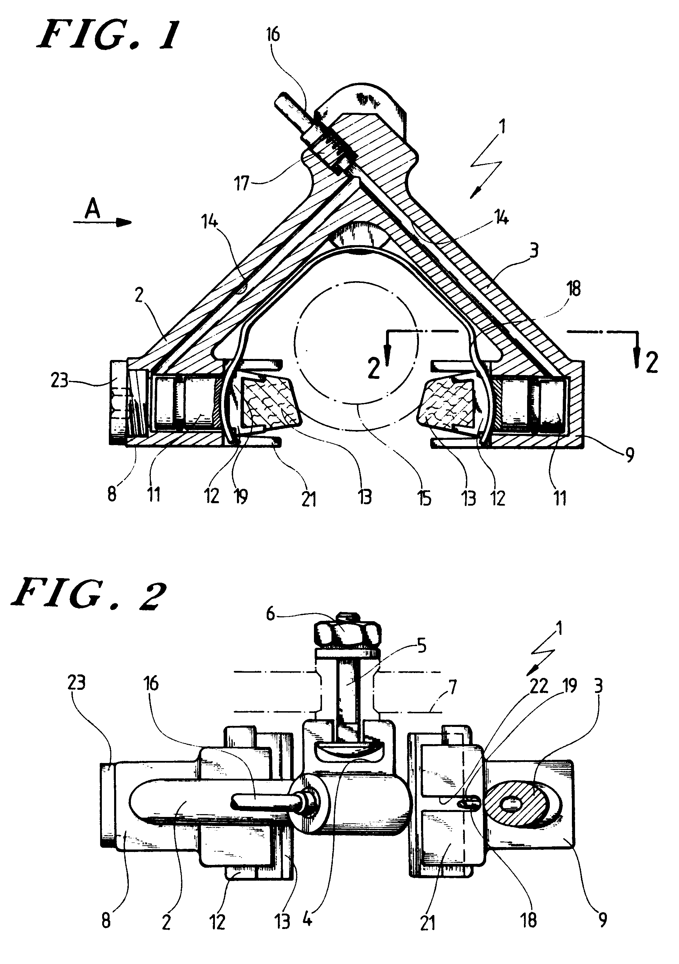

Die Fig. 1 bis 3 zeigen einen V-förmigen Trägerbügel 1, der am Scheitel seiner beiden geradlinigen Schenkel 2, 3 mittels einer in eine Aussparung 4 des Bügels eingesetzten Schraube 5 und einer Mutter 6 am (strichpunktiert dargestellten) Rahmen 7 eines Fahrrades befestigt werden kann. Die freien Enden der Schenkel 2, 3 sind jeweils durch Einbringen entsprechender, kreiszylindrischer Bohrungen als Bremszylinder 8, 9 ausgebildet. Die Bremszylinder 8, 9 nehmen jeweils einen verschieblichen Kolben 11 auf, an dessen über den Bremszylinder vorstehendem Ende ein Bremsbackenträger 12, z.B. durch einstückige Verbindung befestigt ist. Der Bremsbackenträger 12 nimmt jeweils einen Bremsbacken 13 auf. Jeder Schenkel 2, 3 des Bügels 1 enthält eine geradlinige Bohrung 14, die sich im Scheitel der Schenkel 2, 3 vereinigen. Die Bohrungen 14 dienen als Zuleitung für ein Hydraulikmedium zu den Bremszylindern 8, 9. Unter dem Druck des Hydraulikmediums verschieben sich die Kolben 11 und mit ihnen die Bremsbacken 13 aufeinander zu und legen sich unter Ausübung einer Bremswirkung an die Felge 15 des bettreffenden Rades an. Die Einführung des Hydraulikmediums in die Bohrungen 14 und die Bremszylinder 8, 9 erfolgt über eine Leitung 16, die über entsprechende Verbindungsstücke 17 an den Trägerbügel 1 angeschlossen ist.

Um die Kolben 11 und die von ihnen betätigten Bremsbacken 13 bei nachlassendem Hydraulikdruck jeweils wieder in ihre Ausgangsstellung zurückzuführen, ist eine gemeinsame Bügelfeder 18 vorgesehen, die an der Außenseite der Bremszylinder 8, 9 zwischen den Schenkeln 2, 3 des Bügels 1 angeordnet ist, mit ihren freien Enden an den Backenträgern 12 angreift und diese von der Felge wegdrückt. Wie dargestellt, greifen dabei die freien Enden der Bügelfeder 18 in entsprechende Schlitze 19 der Backenträger 12 ein, wobei die Bügelenden ihre Federkraft gegen den jeweiligen Boden der Schlitze 19 ausüben, um die Kolben 11 in ihre Ausgangsposition zurückzuschieben.

Wie weiterhin aus Fig. 1 und 2 ersichtlich, weist jeder Bremszylinder 8, 9 einen den Bremsbackenträger 12 oben und unten übergreifenden Vorsprung 21 auf, in dem jeweils ein Schlitz 22 ausgebildet ist, der mit dem Schlitz 19 im Bremsbackenträger 12 ausgerichtet ist, so daß die Enden der Bügelfeder 18 auch den Schlitz 22 durchlaufen (Fig. 1). Die Wände der Schlitze 22 bilden dabei Anlageflächen für die Enden der Bügelfeder 18, wodurch bei einem Bremsvorgang die Bremskraft von den Bremsbackenträgern 12 über die Enden der Bügelfeder 18 auf die Bremszylinder und damit auf die mit ihnen einstückigen Schenkel 2, 3 des Trägerbügels 1 und damit auf den Fahrradrahmen übertragen werden können. Aufgrund der gebogenen Form der Enden der Bügelfeder 18 liegen diese in einem Bereich an den erwähnten Anlageflächen der Schlitze 22 an, der vor dem Ende der Bohrung in den Bremszylindern 8, 9 liegt. Somit ist der in dieser Bohrung geführte Kolben 11 von der senkrecht zur Zeichnungsebene der Fig. 1 wirkenden Bremskraft weitgehend entlastet.

Die Bügelfeder 18 übt somit eine Doppelfunktion aus: Sie ist die Vorspannfeder für die Bremsbacken 13 und übernimmt weiterhin die Krafteinleitung in den Fahrradrahmen.

Bei der dargestellten Ausführungsform ist der Trägerbügel 1 V-förmig ausgebildet und besteht aus einem einzigen Stück, z.B. aus Leichtmetallegierung. Die in seinen Schenkeln 2, 3 angeordneten, geradlinigen Bohrungen 14 lassen sich leicht ausbilden, wobei man vom Scheitelpunkt dieser Schenkel oder von deren Enden ausgehen kann. Die beiden Bremszylinder 8, 9 sind ebenfalls einstückig in den Trägerbügel 1 eingeformt. Wie dargestellt, sind die Bohrungen beider Bremszylinder zueinander so ausgerichtet, daß sie durch einen einzigen Ausbohrvorgang (in Fig. 1 von links nach rechts) herstellbar sind. Der Bremszylinder 9 besteht dabei aus einer Sackbohrung, während der gegenüberliegende Bremszylinder 8 eine durchgehende Bohrung aufweist, die durch einen Deckel 23 verschlossen wird. Auch die Leitung 16 läßt sich in einfacher Weise mit dem Trägerbügel 1 verbinden. Insgesamt läßt sich somit der Trägerbügel 1 besonders bequem und ohne nennenswerten Aufwand fertigen.

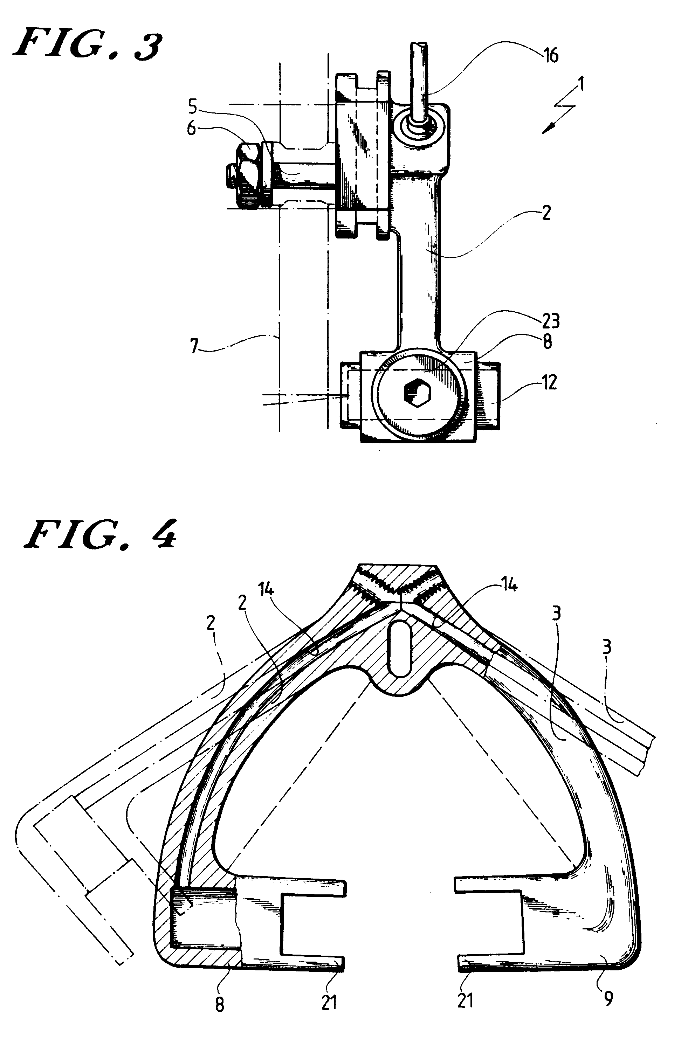

Die Fig. 4 zeigt eine andere Ausführungsform eines Trägerbügels, bei dem im Gegensatz zu Fig. 1 die Schenkel 2, 3 nicht geradlinig, sondern gebogen verlaufen. Hierdurch entsteht zwischen den Schenkeln 2, 3 mehr Platz, beispielsweise zur Anordnung eines Schutzbleches des Fahrrades oder eines anderen Fahrradteils. In Fig. 4 ist die Kontur eines entsprechenden V-förmigen Trägerbügels mit geradlinigen Schenkeln gestrichelt angedeutet. Man erkennt den vergrößerten Raum, welcher sich durch die Krümmung der Schenkel 2, 3 gegenüber einem geradlinigen Verlauf ergibt.

Trotz seiner Krümmung läßt sich auch der Trägerbügel gemäß Fig. 4 in einfacher Weise herstellen. Man geht aus von einem V-förmigen Rohling, der in Fig. 4 strichpunktiert angedeutet ist. In diesen Rohling werden die zylindrischen Bohrungen der Bremszylinder 8, 9 sowie die geradlinigen Bohrungen 14 für die Zuleitung des Hydraulikmediums angebracht. Anschließend werden die geradlinigen Schenkel 2, 3 gebogen, so daß sie die dargestellte, gekrümmte Form einnehmen.

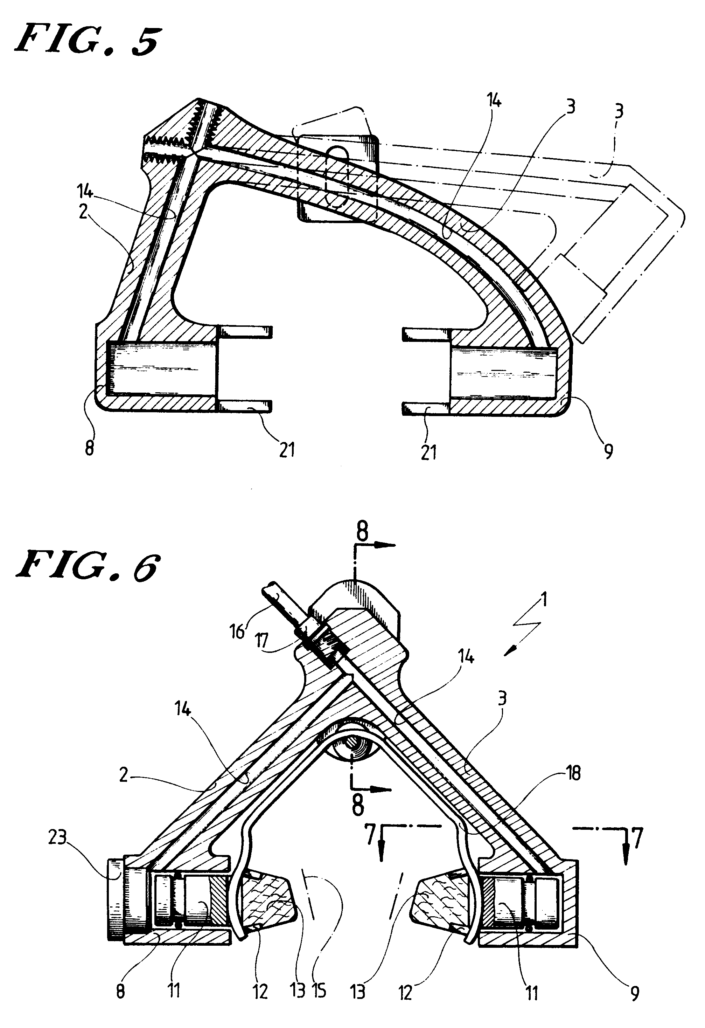

Die Fig. 5 zeigt eine gegenüber Fig. 4 insoweit abgewandelte Ausführungsform, als die beiden Schenkel 2, 3 des im wesentlichen immer noch V-förmigen Trägerbügels zueinander unsymmetrisch ausgebildet sind und unterschiedlich gekrümmt verlaufen. Der Schenkel 2 verläuft im wesentlichen geradlinig, während der Schenkel 3 gebogen ist. Auch bei der Fertigung dieser Ausführungsform geht man von einem zunächst geradlinig verlaufenden Schenkel 3 aus, der entsprechend ausgebohrt wird. Anschließend wird der Schenkel 3 in seine endgültige Form gebogen.

Bei Fahrradbremsen der hier beschriebenen Art ist es häufig erforderlich, den Bremsbackenträger und den von diesem getragenen Bremsbacken möglichst tangential zur Felge des abzubremsenden Rades auszurichten. Bei der in Fig. 6 bis 8 dargestellten Ausführungsform einer Felgenbremse ist diese Ausrichtmöglichkeit in besonders einfacher Weise verwirklicht.

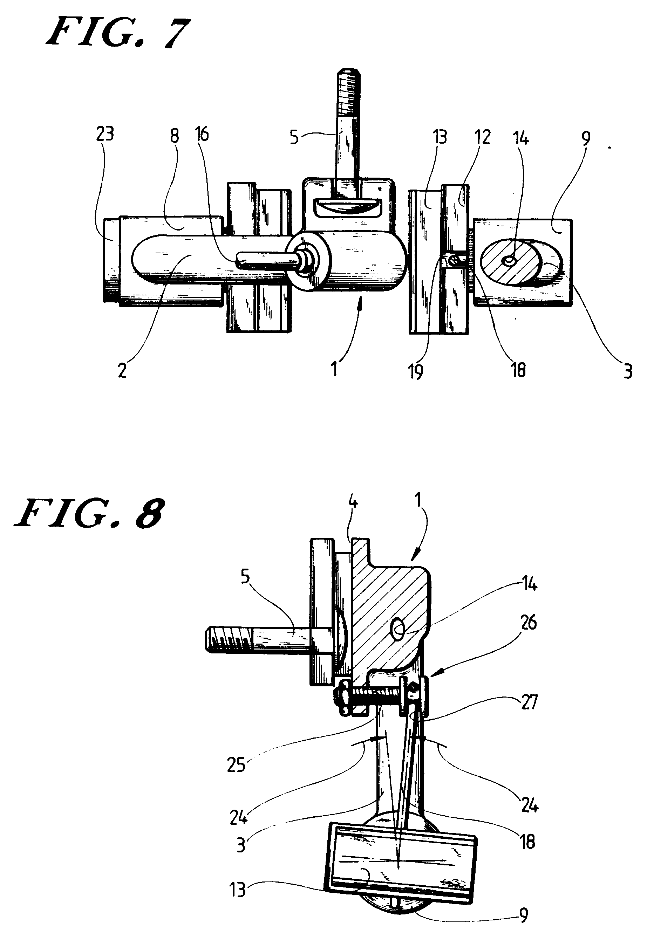

Wie dargestellt, greifen die freien Enden der Bügelfeder 18 wiederum in Schlitze 19 der Bremsbackenträger 12 ein. Die Kolben 11, mit denen die Bremsbackenträger 12 verbunden sind, sind in den kreiszylindrischen Bohrungen der Bremszylinder 8, 9 verdrehbar. Dementsprechend können durch Verschwenkung der formschlüssig in die Schlitze 19 eingreifenden Bügelfeder 18 in Richtung der Pfeile 24 (Fig. 8) die Bremsbackenträger 12 und mit ihnen die Bremsbacken 13 verschwenkt und tangential zur Felge 15 des Fahrrades ausgerichtet werden.

Zur Feststellung der Bügelfeder 18 und damit der Bremsbacken 13 ist am Träger 1 eine frei abstehende Schraube 25 angeordnet, die einen Kopf 26 mit Umfangsrille 27 aufweist. In dieser Rille ruht der Scheitel der Bügelfeder 18. Durch entsprechende Verstellung der Schraube 25 kann die Bügelfeder 18 in beliebiger Schräglage festgestellt werden. Im übrigen entspricht die Ausführungsform gemäß Fig. 6 bis 8 derjenigen nach Fig. 1 bis 3.

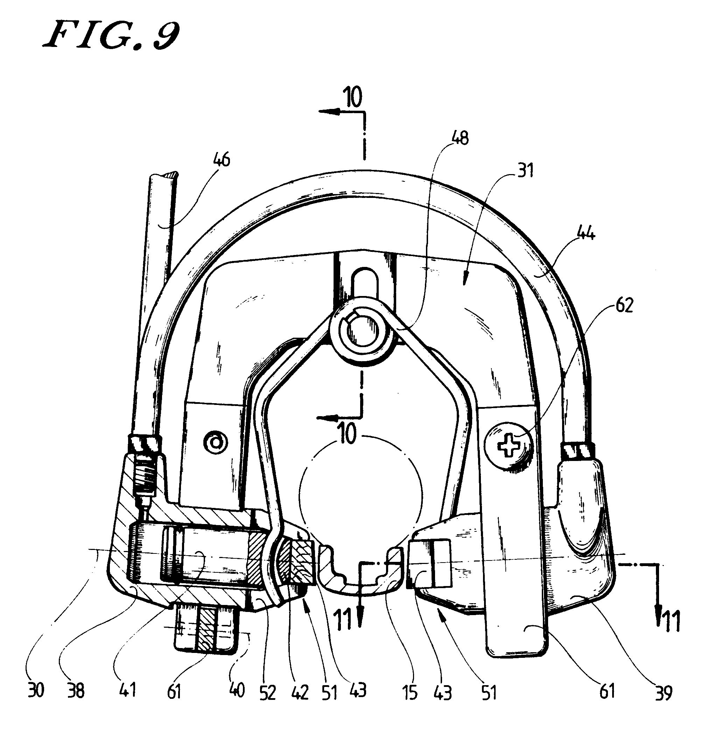

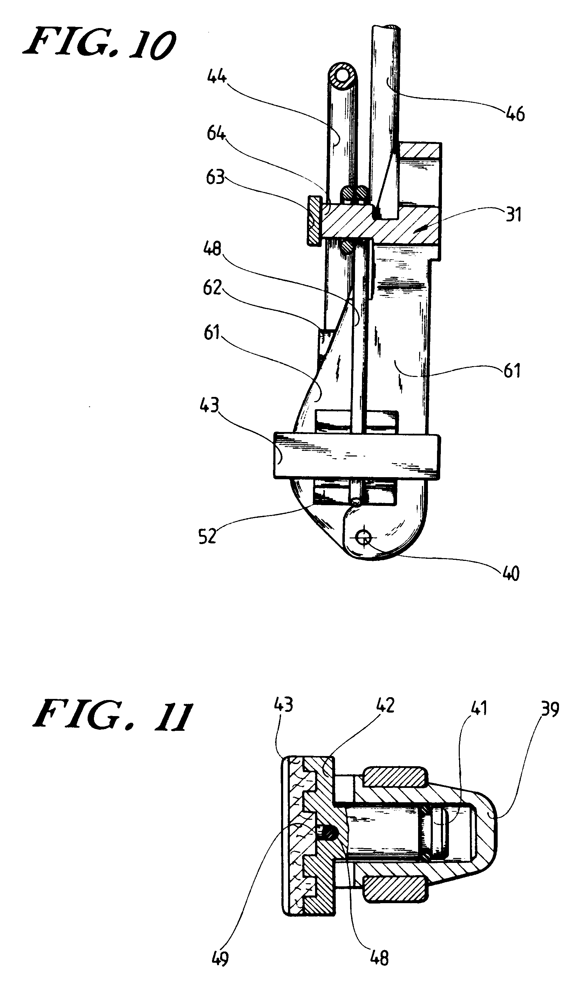

Bei der Ausführungsform gemäß Fig. 9 bis 11 hat ein Trägerbügel 31 der Felgenbremse eine im wesentlichen U-förmige Form. Zwei Bremszylinder 38, 39 sind als besondere Bauteile ausgebildet und in die Schenkel des U-förmigen Bügels 31 eingesetzt. Die Zuleitungen für das Hydraulikmedium werden in diesem Falle von Schlauchleitungen 44, 46 gebildet, die außerhalb des Trägerbügels 31 verlaufen. Eine gegenüber den Ausführungsformen gemäß Fig. 1 bis 3 und 6, 8 anders ausgebildete Bügelfeder 48 dient wiederum zur Vorspannung der die Bremsbacken 43 tragenden Kolben in ihre Ausgangsposition, wobei die Enden der Bügelfeder 48 wiederum in entsprechende Schlitze 49 der Bremsbackenträger 43 formschlüssig eingreifen.

Wie dargestellt, übergreifen Vorsprünge 51 der Bremszylinder 38, 39 die Bremsbackenträger 42. Die Vorsprünge 51 weisen wiederum, genauso wie bei der Ausführungsform gemäß Fig. 1 bis 3, mit den Schlitzen 49 ausgerichtete Schlitze 52 auf, deren Wände als Anlagefläche für die Enden der Bügelfeder 48 dienen, so daß auch bei dieser Ausführungsform senkrecht zur Zeichnungsebene der Fig. 9 wirkende Bremskräfte vom Bremsbackenträger 42 über die Enden der Bügelfeder 48 auf die Bremszylinder und damit auf den Trägerbügel 31 und den Fahrradrahmen übertragen werden können.

Bei der Ausführungsform nach Fig. 9 bis 11 durchdringen die Enden der Bügelfeder 48 die erwähnten Schlitze im Bremsbackenträger und im Vorsprung 51 der Bremszylinder 38, 39. Da ein formschlüssiger Eingriff vorliegt und die Enden der Bügelfeder 48 dicht an den Seitenwänden der Schlitze anliegen, ist eine Relativverdrehung der Bremsbackenträger 42 relativ zu den Bremszylindern 38, 39 unmöglich, wodurch eine tangentiale Ausrichtung der Bremsbacken 43 zur Felge 15 an sich ausgeschlossen ist. Um eine derartige Ausrichtung dennoch durchführen zu können, sind bei dieser Ausführungsform die als besondere Bauteile ausgebildeten Bremszylinder 38, 39 um ihre Achse 30 verdrehbar in den Schenkeln des Trägerbügels 31 gehalten. An jedem Ende des Trägerbügels 31 ist eine um eine Drehachse 40 schwenkbare Klappe 61 angeordnet, die mittels einer Schraube 62 am Bügel 31 festgestellt werden kann. Zwischen dem jeweiligen Ende des Trägerbügels 31 und der Klappe 61 wird innerhalb entsprechender Aussparungen der Bremszylinder 38, 39 festgespannt, nachdem er vorher in eine solche Lage eingestellt ist, daß der Bremsbacken 43 die gewünschte, tangentiale Ausrichtung zur Felge 15 erhält.

Der Scheitel der Feder 48, der als mehrfache Schraubenwindung ausgebildet ist, wird von einem mit Endkappe 63 versehenen Bolzen 64 aufgenommen, der vom Bügel 31 absteht. Auf diese Weise kann der Scheitel der Bügelfeder 48 einer Verschwenkung der Bremsbacken 43 folgen, indem er auf dem Bolzen 64 gleitet.

Der im wesentlichen V-förmig ausgebildete und nach dem beschriebenen Verfahren hergestellte Träger gemäß Fig. 1, 2, 4 und 5 muß nicht unbedingt mit einer Bügelfeder 18 ausgerüstet sein. Derartige Träger eignen sich auch für Bremszylinder, die in ihrem Inneren eine den Kolben zurückspannende Schraubenfeder oder dergleichen aufweisen.

**Patentansprüche**

1.  Hydraulische Felgenbremse für Fahrräder mit einem am Rahmen des Fahrrades befestigten Trägerbügel, mit zwei an den Schenkeln des Bügels angeordneten Bremszylindern, mit in den Zylindern verschieblichen, federbelasteten Kolben, mit an den Kolben angeordneten, über die Zylinder vorstehenden Bremsbackenträgern und mit an den Backenträgern befestigten Bremsbacken, die bei Ausübung eines hydraulischen Druckes auf die Kolben gegen die Felge anpreßbar sind,
    **dadurch gekennzeichnet,**
    daß außerhalb der Bremszylinder (8, 9; 38, 39) eine gemeinsame Bügelfeder (18, 48) angeordnet ist, welche mit ihren freien Enden an den Backenträgern (12, 42) angreift und diese von der Felge (15) wegdrückt.

2.  Bremse nach Anspruch 1, dadurch gekennzeichnet, daß die Enden der Bügelfeder (18, 48) in Schlitze (19, 49) der Backenträger (12, 42) eingreifen.

3.  Bremse nach Anspruch 1 oder 2, dadurch gekennzeichnet, daß jeder Bremszylinder (8, 9; 38, 39) einen den Bremsbackenträger (12, 42) übergreifenden Vorsprung (21, 51) mit einer Anlagefläche aufweist, und die Enden der Bügelfeder (18, 48) zwecks Übertragung der Bremskraft auf den Trägerbügel (1, 31) an den Anlageflächen anliegen.

4.  Bremse nach Anspruch 3, dadurch gekennzeichnet, daß die Anlagefläche die Wand eines im Vorsprung (21, 51) ausgebildeten Schlitzes (22) ist.

5.  Bremse, insbesondere nach einem der Ansprüche 1 bis 4, dadurch gekennzeichnet, daß der Trägerbügel (1) einstückig V-förmig ausgebildet ist, und in seinen Schenkeln (2,3) geradlinige Bohrungen (14) für die Zuleitung von Hydraulikmedium zu den in die Schenkelenden eingeformten Bremszylindern (8, 9) aufweist.

6.  Bremse nach Anspruch 5, dadurch gekennzeichnet, daß beide Bremszylinder (8, 9) zueinander so ausgerichtet sind, daß sie durch einen einzigen Ausbohrvorgang herstellbar sind, wobei der eine Bremszylinder (9) eine Sackbohrung und der andere (8) eine durchgehende, mit einem Deckel (23) verschließbare Bohrung aufweist.

7. Bremse nach Anspruch 5, dadurch gekennzeichnet, daß die Schenkel (2, 3) des Trägerbügels (1) gekrümmt sind.

8. Bremse nach Anspruch 7, dadurch gekennzeichnet, daß die Schenkel (2, 3) zueinander unsymmetrisch ausgebildet und/oder gekrümmt sind.

9. Bremse nach einem der voranstehenden Ansprüche, dadurch gekennzeichnet, daß die Bremsbacken (13) durch Verschwenken der Bügelfeder (18) tangential zur Felge (15) ausrichtbar sind.

10. Bremse nach Anspruch 9, dadurch gekennzeichnet, daß die Bügelfeder (18) in der ausgerichteten Stellung der Bremsbacken (13) durch eine Feststellvorrichtung (25, 26, 27) feststellbar ist.

11. Bremse nach Anspruch 3 und 9, dadurch gekennzeichnet, daß die Bremszylinder (38, 39) mit ihren Vorsprüngen (51) drehbar und feststellbar im Trägerbügel (31) gehalten sind.

12. Verfahren zur Herstellung eines V-förmigen Trägerbügels nach Anspruch 7 oder 8, dadurch gekennzeichnet, daß man die Bohrungen (14) für die Zuleitung des Hydraulikmediums in die geradlinigen Schenkel (2, 3) des Bügels (1) einbringt und die Schenkel anschließend verbiegt.

**Claims**

1. A hydraulic rim brake for bicycles comprising a carrier stirrup fixed to the frame of the bicycle, and comprising two brake cylinders, arranged on the legs of the stirrup, having movable spring-loaded pistons in the cylinders, brake block carriers mounted on the pistons and projecting beyond the cylinders, and brake blocks fixed to the brake block carriers which on exertion of a hydraulic pressure on the pistons can be pressed against the rim, characterized in that a common stirrup spring (18, 48) is disposed outside the brake cylinders (8, 9; 38, 39) which engages by means of its free ends on the block carriers (12, 42) and pushes these away from the rim (15).

2. A brake according to claim 1, characterized in that the ends of the stirrup spring (18, 48) engage in slots (19, 49) in the block carriers (12, 42).

3. A brake according to claim 1 or claim 2, characterized in that each brake cylinder (8, 9; 38, 39) comprises a projection (21, 51) which extends over the block carrier (12, 42) and comprises a bearing surface, and the ends of the stirrup spring (18, 48) bear on the bearing surface for the purpose of transmitting the braking force to the carrier stirrup (1, 31).

4. A brake according to claim 1, characterized in that the bearing surface is the wall of a slot (22) formed in the projection (21, 51).

5. A brake, in particular according to any one of claims 1 to 4, characterized in that the carrier stirrup (1) is formed in one piece having a V-shape and comprises in its legs (2, 3) linear bores (14) for supplying hydraulic medium to the brake cylinders (8, 9) formed in the ends of the legs.

6. A brake according to claim 5, characterized in that both brake cylinders (8, 9) are directed towards one another so that they can be manufactured by a single boring operation, where one brake cylinder (9) comprises a blind bored hole and the other (8) a through bored hole which can be closed by a cover (23).

7. A brake according to claim 5, characterized in that the legs (2, 3) of the carrier stirrup (1) are curved.

8. A brake according to claim 7, characterized in that the legs (2, 3) are formed asymmetrically with respect to one another and/or are curved.

9. A brake according to any one of the preceding claims, characterized in that the brake blocks (13) can be aligned tangentially to the rim (15) by tilting the stirrup spring (18).

10. A brake according to claim 9, characterized in that the stirrup spring (18) can be fixed with the brake blocks (13) in the aligned position by means of a fixing device (25, 26, 27).

11. A brake according to claims 3 and 9, characterized in that the brake cylinders (38, 39) together with their projections (51) are held rotatably and adjustably in the carrier stirrup (31).

12. A process for manufacturing a V-shaped carrier stirrup in accordance with claim 7 or 8, characterized in that the bores (14) for supplying the hydraulic medium are made in the linear legs (2, 3) and the legs are then bent.

**Revendications**

1. Frein hydraulique de jante de bicyclette avec un étrier porteur fixé au cadre de la bicyclette, avec deux cylindres de frein disposés sur les branches de l'étrier, avec des pistons rappelés par ressort montés coulissant dans les cylindres, avec des porte-patin de freinage disposés sur les pistons en saillie par rapport aux cylindres, et avec des patins de freinage fixés aux porte-patins et qui peuvent être serrés contre la jante par l'exercice d'une pression hydraulique sur les pistons, caractérisé en ce que, en dehors des cylindres de frein (8, 9 ; 38, 39) est disposé un ressort (18, 48) commun d'étrier qui s'engage avec les porte-patins (12, 42) par ses extrémités libres et pousse ces dernières en les éloignant de la jante (15).

2. Frein de la revendication 1, caractérisé en ce que les extrémités du ressort d'étrier (18, 48) sont engagées dans des fentes (19, 49) des porte-patins (12, 42).

3. Frein de la revendication 1 ou 2, caractérisé en ce que chaque cylindre de frein (8, 9 ; 38, 39) présente une avancée (21, 51) ayant une surface d'appui et embrassant un des porte-patins (12, 42) et les extrémités du ressort d'étrier (18, 48) s'appliquent contre les surfaces d'appui en vue de la transmission à l'étrier (1, 31) de la force de freinage.

4. Frein de la revendication 3, caractérisé en ce que la surface d'appui est celle de la paroi d'une fente (22) ménagée dans l'avancée (21, 51).

5. Frein, en particulier de l'une des revendications 1 à 4, caractérisé en ce que l'étrier (1) est en une seule pièce à configuration en V et il présente dans ses branches (2, 3) des canaux (14) rectilignes pour la conduite du fluide hydraulique aux cylindres de frein (8, 9) ménagés à l'extrémité des branches.

6. Frein de la revendication 5, caractérisé en ce que les deux cylindres de frein (8, 9) sont dirigés l'un vers l'autre de sorte qu'ils sont réalisables par une unique opération de perçage, l'un des cylindres de frein (9) étant un trou borgne et l'autre (8) un trou traversant pouvant être fermé par un couvercle (23).

7. Frein de la revendication 5, caractérisé en ce que les branches (2, 3) de l'étrier sont incurvées.

8. Frein de la revendication 7, caractérisé en ce que les branches (2, 3) sont conformées et/ou incurvées non symétriquement l'une par rapport à l'autre.

9. Frein de l'une quelconque des revendications précédentes, caractérisé en ce que les patins de freinage (13) peuvent être dirigés tangentiellement à la jante (15) par un basculement du ressort d'étrier (18).

10. Frein de la revendication 9, caractérisé en ce que le ressort d'étrier (18) peut être immobilisé à la position de direction des patins de frein (13) par un dispositif d'immobilisation (25, 26, 27).

11. Frein de la revendication 3 ou 9, caractérisé en ce que les cylindres de frein (38, 39) avec leurs avancées (51) sont tenus dans l'étrier (31) pour pouvoir tourner et pouvoir être immobilisés.

12. Procédé pour la fabrication d'un étrier à configuration en V de la revendication 8, caractérisé en ce qu'on exécute les canaux (14) pour la conduite du fluide hydraulique dans les branches rectilignes (2, 3) de l'étrier (1) et on déforme ensuite ces branches.

# FIG. 1

# FIG. 2

*FIG. 3*

*FIG. 4*

## FIG. 5

## FIG. 6

## FIG. 7

## FIG. 8

FIG.9

*FIG. 10*

*FIG. 11*